# EUROPÄISCHE PATENTSCHRIFT

(11) **EP 3 500 473 B1**
(45) Veröffentlichungstag und Bekanntmachung des Hinweises auf die Patenterteilung: **03.06.2020**
(21) Anmeldenummer: 17755480.5
(22) Anmeldetag: 17.08.2017
(51) Int. Cl.: B61C 17/00, B60L 1/00, B60L 1/10, B60L 1/14, B61D 1/00, B61D 27/00

(54) **ENERGIEVERSORGUNGSSYSTEM EINES SCHIENENFAHRZEUGS**
ENERGY SUPPLY SYSTEM OF A RAIL VEHICLE
SYSTÈME D'ALIMENTATION EN ÉNERGIE D'UN VÉHICULE SUR RAIL

(30) Priorität: 29.09.2016 EP 16191459
(43) Veröffentlichungstag der Anmeldung: 26.06.2019
(73) Patentinhaber: Siemens Mobility GmbH, 81739 München (DE); Siemens Mobility Austria GmbH, 1210 Wien (AT)
(72) Erfinder: LINNHÖFER, Martin, 45259 Essen (DE); SCHABBAUER, Werner, 7082 Donnerskirchen (AT); WELLNER, Andreas, 47803 Krefeld (DE); WU, Xiao Qiang, 47804 Krefeld (DE)
(74) Vertreter: Deffner, Rolf
(86) Internationale Anmeldenummer: PCT/EP2017/070833
(87) Internationale Veröffentlichungsnummer: WO 2018/059826

(56) Entgegenhaltungen:
- EP-A1- 0 485 702
- EP-A2- 1 356 981
- WO-A2-2013/186005
- FLERLAGE H ET AL: "ENERGIEVERSORGUNG VON DOPPELSTOCKWAGEN MIT MITTELFREQUENTER POTENZIALTRENNUNG//POWER SUPPLY OF DOUBLE-DECK CARS WITH MEDIUM-FREQUENCY ELECTRICAL ISOLATION//ALIMENTATION ENERGETIQUE DE VOITURES A DOUBLE ETAGE AVEC SEPARATION DE POTENTIEL A MOYENNE FREQUEN", EB- ELEKTRISCHE BAHNEN, DIV-DEUTSCHER INDUSTRIEVERLAG, Bd. 101, Nr. 12, 1. Dezember 2003 (2003-12-01), Seiten 548-553, XP001185169, ISSN: 0013-5437

## Beschreibung

Die Erfindung betrifft ein Schienenfahrzeug mit einem Energieversorgungssystem zur Speisung von elektrischen Verbrauchern, wobei das Schienenfahrzeug Reisezugwagen aufweist und wobei das Schienenfahrzeug eine Zugsammelschiene aufweist. Weiter betrifft die Erfindung ein Verfahren zum Betreiben des Energieversorgungssystems eines solchen Schienenfahrzeugs.

In Schienenfahrzeugen erfolgt die Versorgung der elektrischen Verbraucher eines Reisezugwagens mit elektrischer Energie in erster Linie durch Umwandlung der aus der Zugsammelschiene (vgl. UIC550, UIC626) bereitgestellten Hochspannung in verbraucherübliche Drehspannungssysteme (z.B. 3AC400V/50Hz oder 3AC480V/60Hz) und Batteriespannung (z.B. DC24V oder 110V). Die Versorgung mit elektrischer Energie wird oftmals auch als Speisung mit elektrischer Energie oder kurz als Speisung der Verbraucher bezeichnet. Dabei wird in jedem Reisezugwagen ein Energieversorgungsblock installiert, der die Umwandlung der Energie aus der Zugsammelschiene gemäß UIC550 / UIC626 durchführt und lokal für den jeweils einzelnen Reisezugwagen zur Verfügen stellt.

Der Erfindung liegt die Aufgabe zu Grunde, das Energieversorgungssystem eines Schienenfahrzeugs zu verbessern.

Die Aufgabe wird durch ein Schienenfahrzeug mit einem Energieversorgungssystem zur Speisung von elektrischen Verbrauchern gelöst, wobei das Schienenfahrzeug Reisezugwagen aufweist, wobei das Schienenfahrzeug eine Zugsammelschiene aufweist, wobei das Schienenfahrzeug eine DC-Versorgungssammelschiene und eine 3AC-Sammelschiene aufweist, wobei die DC-Versorgungssammelschiene und die 3AC-Sammelschiene sich über mindestens zwei der Reisezugwagen erstrecken, wobei die DC-Versorgungssammelschiene über eine zentrale Energieversorgungseinheit mit der Zugsammelschiene verbunden ist, wobei die zentrale Energieversorgungseinheit in einem ersten Reisezugwagen der mindestens zwei Reisezugwagen, über die sich die DC-Versorgungssammelschiene und die 3AC-Sammelschiene erstrecken, angeordnet ist, wobei in mindestens einem zweiten Reisezugwagen der mindestens zwei Reisezugwagen jeweils eine dezentraler Energieversorgungseinheit angeordnet ist, wobei die dezentrale Energieversorgungseinheit mit der DC-Versorgungssammelschiene und der 3AC-Sammelschiene verbunden ist. Weiter wird die Aufgabe durch ein durch Verfahren zum Betreiben des Energieversorgungssystems eines solchen Schienenfahrzeugs gelöst, wobei mittels der zentralen Energieversorgungseinheit die DC-Versorgungssammelschiene und/oder die 3AC-Sammelschiene mit elektrischer Energie aus der Zugsammelschiene versorgt werden, wobei mittels der dezentralen Energieversorgungseinheit elektrische Energie zwischen der DC-Versorgungssammelschiene und der 3AC-Sammelschiene ausgetauscht wird.

Weitere vorteilhafte Ausgestaltungen der Erfindung sind in den abhängigen Ansprüchen angegeben.

Der Erfindung liegt die Erkenntnis zugrunde, dass sich die Energieversorgung von elektrischen Verbrauchern in Reisezugwagen dadurch verbessern lässt, dass anstelle von Energieversorgungsblöcken, von denen in jedem zu versorgenden Reisezugwagen mindestens einer angeordnet ist, nun eine zentrale Energieversorgungseinheit und mindestens eine dezentrale Energieversorgungseinheit eingesetzt werden. Neben der Zugsammelschiene, die sich über alle Reisezugwagen eines Zugverbands erstreckt, werden zusätzlich eine DC-Versorgungssammelschiene und eine 3AC-Sammelschiene in dem Schienenfahrzeug angeordnet. Die DC-Versorgungssammelschiene und die 3AC-Sammelschiene erstrecken sich dabei über mindestens zwei Reisezugwagen. Sie können sich dabei über alle Reisezugwagen des Schienenfahrzeugs oder nur über einen Teil der Reisezugwagen des Schienenfahrzeugs erstrecken. Dabei wandelt ein zentraler Hochspannungsumrichter in der zentralen Energieversorgungseinheit die Spannung der Zugsammelschiene in eine geregelt Gleichspannung für DC-Versorgungssammelschiene um und stellt diese über die DC-Versorgungssammelschiene, die sich über mindestens zwei Reisezugwagen erstreckt, dem oder den weiteren Reisezugwagen zur Verfügung. Da bei dieser Anordnung die zentrale Energieversorgungseinheit die elektrische Versorgung von mehreren (mindestens zwei) Reisezugwagen sicherstellt, hat es sich als vorteilhaft erwiesen, diesen besonders ausfallsicher zu konstruieren. Dazu können einzelne Komponenten der zentralen Energieversorgungseinheit wie beispielsweise ein dort angeordneter Eingangssteller als zentraler Hochspannungsumrichter zur Umformung der Spannung der Zugsammelschiene in eine Gleichspannung für die DC Versorgungssammelschiene redundant aufgebaut sein. Spielt die Kostensituation eine vorrangige Rolle bei der Auslegung kann auch auf eine redundante Auslegung verzichtet werden.

In jedem dieser so versorgten Reisezugwagen wird dann mit einer dezentralen Energieversorgungseinheit, die einen Umrichter, insbesondere einen Niederspannungsumrichter, umfasst, ein Drehspannungssystem erzeugt. Typischerweise handelt es sich bei dem Drehspannungssystem um ein 3AC400V/50Hz Netz, mit dem Standardkomponenten betrieben werden können. Die einzelnen Drehstromsysteme werden wagenübergreifend zu der gemeinsamen 3AC-Sammelschiene zusammengeschaltet.

Somit weist das Schienenfahrzeug bzw. der Teil des Schienenfahrzeugs, über die sich die DC-Versorgungssammelschiene und die 3AC-Sammelschiene erstrecken, eine zentrale Energieversorgungseinheit und, abhängig von der Anzahl der zu versorgenden Reisezugwagen, eine oder mehrere dezentrale Energieversorgungseinheiten auf. Um die Redundanz zu erhöhen können darüber hinaus weitere zentrale und/oder dezentrale Energieversorgungseinheiten im Schienenfahrzeug angeordnet werden.

Damit ist ein Energieversorgungsystem auch gerade bei Mehrsystem-Schienenfahrzeugen, die für den Betrieb bei unterschiedlichen Netzspannungen im Bahnnetz geeignet sind auf einfache Weise möglich. In diesem Fall ist nur die zentrale Energieversorgungseinheit auf die unterschiedlichen Spannungssysteme der Zugsammelschiene zu ertüchtigen. Die dezentralen Energieversorgungseinheiten sind unabhängig von dem Spannungssystem des Bahnnetzes und damit vom Spannungssystem der Zugsammelschiene. Fahrzeuge, die bereits eine DC-Versorgungssammelschiene besitzen sind auf einfache Weise mit den dezentralen Energieversorgungseinheiten nachrüstbar, um eine besonders stabile Energieversorgung in den Reisezugwagen zu gewährleisten.

Bei diesem Energieversorgungssystem erfolgt die Umwandlung der Hochspannung der Zugsammelschienenspannung in die DC-Versorgungssammelschiene zentral. Die Ausgangsspannung für die DC-Versorgungssammelschiene liegt vorteilhafterweise im Niederspannungsbereich, d.h. unterhalb 1000V, so dass die zentrale Energieversorgungseinheit aufgrund der Spannungshöhe der Zugsammelschiene auf Spannungen oberhalb 1000V, insbesondere im Hinblick auf Isolation, auszulegen ist, während die dezentralen Energieversorgungseinheiten nur auf Niederspannung ausgelegt sein müssen. Somit kann die Anzahl der aufwändigen, kostenintensiven Hochspannungsumrichter (Energieversorgungsblöcke), die beim Stand der Technik in jedem Reisezugwagen angeordnet waren, deutlich reduziert werden. Dadurch wird das Energieversorgungssystem des Schienenfahrzeugs kostengünstiger. Darüber hinaus kann durch die Reduzierung der teilweise recht schweren Hochspannungsumrichter eine Gewichtsreduktion des Reisezugwagens erreicht werden, die sowohl zu geringeren Herstellkosten wie auch zu einem günstigeren Betrieb (geringerer Energieverbrauch des Schienenfahrzeugs) führt.

Aus dem Zusammenschalten der 3AC Netze der einzelnen Reisezugwagen zu der 3AC-Sammelschiene, die einen gemeinsamen Netzverbund ergibt, ergibt sich eine erhöhte Redundanz für die Energieversorgung der Verbraucher in jedem versorgten Reisezugwagen. Darüber hinaus ist die Spannungsversorgung auch bei Lastschwankungen aufgrund der hohen Systemleistung zudem deutlich stabiler gegenüber dem Einzelwagenkonzept mit Energieversorgungsblöcken. Auf U/f-geführten zusätzliche Spannungssysteme kann verzichtet werden, da durch die 3AC-Sammelschiene ausreichend Leistung für das Zuschalten von Stoßlasten wie z.B. Kompressoren an jedem Punkt der 3AC Sammelschiene bereitgestellt werden kann. Es ist weiter eine variablere Einzelleistung (Verbraucherlast in einem Reisezugwagen) der Reisezugwagen aufgrund der 3AC-Sammelschiene möglich und damit auch der (temporäre) Entfall einer grundsätzlichen Leistungsbeschränkung eines Reisezugwagens auf beispielsweise 50kVA, da eine Symmetrierung der jeweiligen einzelnen Wagenleistungen über die Sammelschiene auf mehrere Reisezugwagen erfolgen kann.

Ein weiterer Vorteil ergibt sich im Zulassungsverfahren da nur die zentrale Energieversorgungseinheit den Nachweis der Einhaltung der geforderten Impedanz und der Netzrückwirkungen erfüllen muss.

Auch außerhalb des Bahnnetzes können die elektrischen Verbraucher in den Reisezugwagen gespeist, d.h. mit elektrischer Energie versorgt werden. Dazu wird vorteilhafterweise eine Fremdeinspeisung in die DC-Versorgungssammelschiene vorgesehen. Durch eine Schnellabschaltung der zentralen Energieversorgungseinheit kann darüber hinaus ein kurzschlussfester Gleichspannungsausgang an der DC-Versorgungssammelschiene sichergestellt werden.

Bei dem Schienenfahrzeug kann es sich um ein Fahrzeug handelt, das eine oder mehrere Lokomotiven und daran angehängte Reisezugwagen umfasst. Reisezugwagen, die mit einer Lokomotive ein Schienenfahrzeug bilden, sind flexibel einsetzbar. Daher ist man aus Kostengründen bestrebt, die Anzahl der Anschlüsse bzw. allgemein die Anzahl der Schnittstellen an den Reisezugwagen gering zu halten. Eine hohe Anzahl an Schnittstellen ist kostenintensiv und das Zusammenstellen eines Zugverbandes, bzw. die Änderungen eines Zugverbandes durch Hinzufügen oder Herausnehmen einzelner Reisezugwagen wird dadurch zeitaufwändiger. Hinzu kommt, dass eine Verwechslung der einzelnen Anschlüsse zuverlässig verhindert werden muss.

Reisezugwagen erfordern eine Energieversorgung für im Reisezugwagen angeordnete Komponenten wie beispielsweise Klimaanlage, Beleuchtung, Kompressoren, Heizung usw. und dienen der Personenbeförderung.

Bei einer vorteilhaften Ausgestaltung der Erfindung ist die DC-Versorgungssammelschiene für einen Betrieb mit einer Gleichspannung im Bereich von 600V bis 800V ausgelegt. Diese Spannung liegt im Niederspannungsbereich und hat damit nur geringe Anforderungen an die Isolation der DC-Versorgungssammelschiene. Ebenso lassen sich in diesem Spannungsbereich hohe Leistungen bei vergleichsweise geringen Strömen übertragen. Darüber hinaus eignet sich dieser Spannungsbereich, insbesondere bei einer Auslegung der Gleichspannung auf einen Wert von 670V für die Verbindung mit einer Fremdeinspeisung.

Bei einer weiteren vorteilhaften Ausgestaltung der Erfindung ist die zentrale Energieversorgungeinheit redundant ausgelegt. Durch den redundanten Aufbau der zentralen Energieversorgungseinheit kann die Sicherheit der Energieversorgung für das ganze Schienenfahrzeug erhöht werden. Da im Vergleich zu Energieversorgungsblöcken das Schienenfahrzeug nur eine oder zumindest wenige zentrale Energieversorgungseinheiten aufweist, ist eine Anpassung an nur wenigen Komponenten des Schienenfahrzeugs notwendig, um eine hohe Redundanz beim Energieaustausch zwischen Zugsammelschiene und DC-Versorgungssammelschiene zu realisieren. Bei Verwendung zweier baugleicher Umrichterbaugruppen können diese zudem versetzt zueinander getaktet werden, so dass sich Netzstörungen durch Oberschwingungen reduzieren.

Prinzipiell gibt es mehrere Möglichkeiten, diese Redundanz in der zentralen Energieversorgungseinheit vorzusehen. In einem einfachen Fall kann dabei das gesamte Energieversorgungssystem mit zentraler und dezentraler Energieversorgungseinheit mehrfach, insbesondere doppelt, im Schienenfahrzeug vorhanden sein. Alternativ oder ergänzend ist es möglich, eine einzelne oder mehrere Komponenten innerhalb der zentralen Energieversorgungseinheit mehrfach vorzusehen, so dass die zentrale Energieversorgungseinheit intern redundant aufgebaut ist. Die Redundanz kann dabei, je nach zu erreichender Ausfallsicherheit, einfachredundant oder mehrfachredundant ausgelegt werden. Zur weiteren Erhöhung der Versorgungssicherheit können diese Auslegungen zur Redundanz alternativ oder ergänzend auch auf die dezentrale Energieversorgungseinheit übertragen werden.

Bei einer weiteren vorteilhaften Ausgestaltung der Erfindung weist die zentrale Energieversorgungseinheit eine Potenzialtrennung zwischen Zugsammelschiene und DC-Versorgungssammelschiene auf. Damit wird das Potenzial der Zugsammelschiene zuverlässig von den Potenzialen der DC-Versorgungssammelschiene und der 3AC-Sammelschiene getrennt. Dies ist oftmals gefordert, um die DC-Versorgungssammelschiene und die 3AC-Sammelschiene isolationstechnisch für Niederspannung ausführen zu können. Darüber hinaus können Erdschlussfehler im Schienenfahrzeug zuverlässig erkannt werden. Teilweise ist noch ein vorübergehender Betrieb mit einem Erdschluss möglich, wenn die Potenzialtrennung vorhanden ist.

Darüber hinaus kann bei Wartungsarbeiten auf spezielle Trenn-Erdungseinrichtung verzichtet werden. Es ist nur noch eine sichere Trennung der Aus- und Eingänge an der zentralen Energieversorgungseinheit beispielsweise durch Nutzung von einfach zugänglichen Kugelerdern an der Zugsammelschiene, der DC-Versorgungssammelschiene und ggf. an der 3AC Sammelschiene erforderlich. Dies vereinfacht die Wartungsarbeiten bei gleichzeitig gesteigerter Sicherheit.

Bei einer weiteren vorteilhaften Ausgestaltung der Erfindung weist die dezentrale Energieversorgungseinheit eine Potenzialtrennung zwischen DC-Versorgungssammelschiene und 3AC-Sammelschiene auf. Die Potenzialtrennung kann beispielsweise besonders verlustarm mittels mittelfrequenten Wechselrichtern und Mittelfrequenz-Übertragern (MF-Übertragern) realisiert werden. Dies bringt deutliche Vorteile bei der Erdschlussproblematik mit sich. So können sich keine Erdschlussströme bei Vorliegen eines wechselspannungsseitigen Erdschlusses über die DC-Versorgungssammelschiene ausbilden. Zudem kann ein Erdschluss sicher erkannt und lokalisiert werden.

Darüber hinaus kann bei Wartungsarbeiten auf spezielle Trenn-Erdungseinrichtung verzichtet werden. Es ist nur noch eine sichere Trennung der Aus- und Eingänge an der zentralen Energieversorgungseinheit beispielsweise durch Nutzung von einfach zugänglichen Kugelerdern an der DC-Versorgungssammelschiene und an der 3AC Sammelschiene erforderlich. Dies vereinfacht die Wartungsarbeiten bei gleichzeitig gesteigerter Sicherheit.

Auch die Eigenschaften hinsichtlich der elektromagnetischen Verträglichkeit (EMV) verbessern sich. Zudem bilden sich keine hohen Sternpunktspannungen aus. Durch die Potenzialtrennung können die dezentralen Energieversorgungseinheiten ohne weitere Synchronisierungsmaßnahme auf einfache Weise elektrisch parallel bzgl. der 3AC-Sammelschiene betrieben werden.

Bei einer weiteren vorteilhaften Ausgestaltung der Erfindung weist das Schienenfahrzeug eine Batterie und ein Batterieladegerät auf, wobei mittels des Batterieladegerätes elektrische Energie in beiden Energieflussrichtungen gesteuert oder geregelt zwischen der Batterie und der DC-Versorgungssammelschiene und/oder der 3AC-Sammelschiene austauschbar ist. Es hat sich als vorteilhaft für die Verfügbarkeit erwiesen, wenn aus der Batterie nicht nur einzelne, insbesondere sicherheitsrelevante Verbraucher direkt gespeist werden, sondern dass mit Hilfe des Batterieladegerätes auch die DC-Versorgungsspannungsschiene und/oder die 3AC-Sammelschiene versorgt werden kann. Damit können dann alle oder zumindest ein Großteil der elektrischen Verbraucher des Reisezugwagens mit elektrischer Energie versorgt werden. Als besonders vorteilhaft hat es sich erwiesen, wenn anhängig von dem Ladezustand der Batterie einzelne Verbraucher zu- oder abgeschaltet werden können. Somit können neben Sicherheitsfunktionen auch Komfortfunktionen mit diesem Batterieladegerät realisiert werden, sofern ein bidirektionaler Leistungsaustausch möglich ist. Bidirektional bedeutet in diesem Zusammenhang, dass elektrische Energie sowohl von DC-Versorgungsspannungsschiene und/oder die 3AC-Sammelschiene zur Batterie als auch von Batterie zur DC-Versorgungsspannungsschiene und/oder die 3AC-Sammelschiene übertragen werden kann. Dazu kann beispielsweise ein Umrichter mit abschaltbaren Leistungshalbleitern zum Einsatz kommen.

Bei einer weiteren vorteilhaften Ausgestaltung der Erfindung sind die Batterie und das Batterieladegerät über eine Batteriesammelschiene miteinander verbunden, wobei die Batteriesammelschiene sich über mindestens zwei der Reisezugwagen erstreckt. Bei Batterien mit eigenem Lademanagement wird das Laden und Entladen nicht mehr alleine durch die Spannungshöhe an den Batterieklemmen entschieden. Somit sind mehrere Batterien mit Lademanagement an einer Sammelschiene, einer sogenannten Batteriesammelschiene parallel betreibbar. Das Lademanagement einer jeden Batterie oder eines Satzes von mehreren Batterien entscheidet mittels einer Logik oder durch eine externe Steuerung/Regelung, ob die Batterie geladen, entladen oder ohne Leistungsaustausch betrieben wird. Dafür hat es sich als vorteilhaft erwiesen, wenn die Batterie dazu ein Stellglied, beispielsweise einen Gleichstromsteller oder einen Umrichter aufweist, mit dem ein Energieaustausuch gesteuert oder geregelt mit der Batteriesammelschiene vorgenommen werden kann. Damit kommt dem Batterieladegerät die Aufgabe zu, eine entsprechende Spannung an der Batteriesammelschiene bereitzustellen. Diese kann konstant sein oder in Abhängigkeit der Last variieren um die Verluste der Energieübertragung zu verringern. Die Aufgabe der Regelung/Steuerung des Ladevorgangs geht somit von dem Batterieladegerät zum Lademanagement und/oder dem Stellglied der Batterie über. Durch das Zusammenfassen mehrerer Batterienetze zu eine Batteriesammelschiene kann sowohl die Redundanz des Batterienetzes als auch die Leistungsfähigkeit der Batterieversorgung erhöht werden, da mehrere Batterien unterschiedlicher Reisezugwagen zur Versorgung von Verbraucher nur eines Reisezugwagens genutzt werden können.

Bei einer weiteren vorteilhaften Ausgestaltung der Erfindung ist das Batterieladegerät in der dezentralen Energieversorgungseinheit angeordnet, wobei die Batterie im gleichen Reisezugwagen angeordnet ist wie die jeweilige dezentrale Energieversorgungseinheit. Dabei kann die Batterie über das Batterieladegerät aus der DC-Versorgungssammelschiene oder der 3AC-Sammelschiene versorgt werden. Die dezentrale Energieversorgungseinheit umfasst dazu einen Umrichter. Dieser kann innerhalb der dezentralen Energieversorgungseinheit in einer baulichen Einheit, d.h. in dem gleichen Gehäuse, wie die Komponenten zur Verbindung der DC-Versorgungssammelschiene mit der 3AC-Sammelschiene angeordnet sein. Ebenfalls ist eine räumliche Trennung zwischen diesen Komponenten möglich.

Die Batterien haben üblicherweise eine Nennspannung von DC 24V oder DC 110V. Üblicherweise sind die Batterien unterschiedlicher Reisezugwagen nicht direkt über dieses Gleichspannungsnetz miteinander verbunden. Die Batterie stellt sicher, dass auch bei Ausfall der Zugsammelschiene die Verbraucher in den einzelnen Reisezugwagen zuverlässig mit Energie versorgt werden können. Neben der Versorgung der Verbraucher des 3AC-Sammelschiene kann auch die DC-Versorgungssammelschiene mittels der dezentralen Energieversorgungseinheit mit elektrischer Energie aus der Batterie versorgt werden. Somit ist zum einen mittels des Batterieladegerät sowohl die Batterie aufladbar. Des Weiteren ist mittels des Batterieladegerätes auch die 3AC-Sammelschiene und/oder die DC-Versorgungssammelschiene aus der Batterie mit elektrischer Energie versorgbar. Mit anderen Worten kann somit mit dem Ladegerät sowohl die Batterie aus die 3AC-Sammelschiene und/oder die DC-Versorgungssammelschiene aufgeladen werden als auch die 3AC-Sammelschiene und/oder die DC-Versorgungssammelschiene mit elektrischer Energie aus der Batterie versorgt werden.

Bei einer weiteren vorteilhaften Ausgestaltung der Erfindung sind im Falle von mehreren dezentralen Energieversorgungseinheiten die dezentralen Energieversorgungseinheiten baugleich ausgeführt. Dies erhöht die Anzahl der Gleichteile im Schienenfahrzeug und führt, positive Stückkosteneffekte unterstellt, zu einer günstigen Herstellbarkeit der einzelnen dezentralen Energieversorgungseinheiten. Auch für die Wartung muss nur eine begrenzte Anzahl baugleicher Energieversorgungseinheiten vorgehalten werden.

Bei einer weiteren vorteilhaften Ausgestaltung der Erfindung ist die zentrale Energieversorgungseinheit mit der 3AC-Sammelschiene verbunden. Somit kann auch in dem Reisezugwagen, in dem die zentrale Energieversorgungseinheit angeordnet ist, eine Versorgung der 3AC-Sammelschiene stattfinden. Das Modul zur Versorgung der 3AC-Sammelschiene kann dazu in vorteilhafter Weise baugleich sein zu dem Modul der dezentralen Energieversorgungseinheit zur Versorgung der 3AC-Sammelschiene.

Bei einer weiteren vorteilhaften Ausgestaltung der Erfindung ist die zentrale Energieversorgungseinheit zweistufig ausgeführt, wobei eine erste Stufe zwischen der Zugsammelschiene und DC-Versorgungssammelschiene durch einen Eingangssteller mit einer ersten Nennleistung gebildet wird, wobei eine zweite Stufe zwischen DC-Versorgungssammelschiene und 3AC-Sammelschiene durch einen Pulswechselrichter mit einer zweiten Nennleistung gebildet wird, wobei die erste Nennleistung größer ist als die zweite Nennleistung, wobei die dezentrale Energieversorgungseinheit einen weiteren Pulswechselrichter mit der zweiten Nennleistung aufweist. Diese Dimensionierung berücksichtigt die Tatsache, dass zunächst die zentrale Energieversorgungseinheit die Energie aus der Zugsammelschiene entnimmt, die später durch die dezentralen Energieversorgungseinheiten weiterverteilt wird. Insbesondere bei der Verwendung einer Vielzahl von dezentralen Energieversorgungseinheiten hat es sich als günstig erwiesen, die weiteren Pulswechselrichter der dezentralen Energieversorgungseinheiten mit geringerer Nennleistung auszulegen als die Eingangsschaltung des zentralen Energieversorgungssystems. Insbesondere hat sich als günstig erwiesen, wenn die Summe der Nennleistungen des Pulswechselrichters und des/der weiteren dezentralen Umrichter(s) in etwa (Abweichung von 10% möglich) der Nennleistung des Eingangsstellers der zentralen Energieversorgungseinheit entspricht. Dann sind die einzelnen Komponenten des Systems bestmöglich auf die Maximallast in den Reisezugwagen ausgenutzt.

Bei einer weiteren vorteilhaften Ausgestaltung der Erfindung weist das Schienenfahrzeug fünf Reisezugwagen auf, über die sich die DC-Versorgungssammelschiene und die 3AC-Sammelschiene erstrecken, wobei das Schienenfahrzeug einen ersten Reisezugwagen und vier zweite Reisezugwagen umfasst. In Bezug auf Redundanz, Baugröße der einzelnen Energieversorgungseinheiten sowie auf die Größe des Schienenfahrzeugs hat es sich als günstig erwiesen, dass sich die DC-Versorgungssammelschiene und die 3AC-Sammelschiene über fünf Reisezugwagen erstrecken. Damit sind unter anderem die Leistungen über gängige Leistungshalbleiter einfach handhabbar.

Darüber hinaus hat sich die Auslegung der zentralen Energieversorgungseinheit auf ein Schienenfahrzeug, dessen DC-Versorgungssammelschiene bzw. 3AC-Sammelschiene sich über fünf Reisezugwagen erstrecken, als besonders vorteilhaft für die Einhaltung der Impedanzforderungen aus der UIC550 und dem damit einhergehenden Filteraufwand erwiesen. Bei einer geringen Anzahl an Reisezugwagen würden die Eingangsdrosseln der zentralen Energieversorgungseinheit vergrößert werden müssen.

Die vier dezentralen Energieversorgungseinheiten bilden sinnvolle Skalierungen, so dass im Teillastbetrieb einzelne dezentrale Energieversorgungseinheiten für ein verlustreduzierten Betrieb abschaltbar sind, ohne die zuverlässige Energieversorgung der elektrischen Verbraucher zu gefährden.

Bei einer weiteren vorteilhaften Ausgestaltung der Erfindung wird die dezentrale Energieversorgungseinheit in Abhängigkeit des Leistungsbedarfs der an die 3AC-Sammelschiene angeschlossenen elektrischen Verbraucher gesteuert, insbesondere zu- oder abgeschaltet. Aufgrund der DC-Versorgungssammelschiene und der 3AC-Sammelschiene, die sich über mehrere Reisezugwagen erstreckt, kann elektrische Energie zwischen den einzelnen Reisezugwagen ausgetauscht werden. Damit ist es möglich, das Betriebsverhalten der dezentralen Energieversorgungseinheiten zu optimieren indem die Aufteilung der Energieübertragung auf die einzelnen dezentralen Energieversorgungseinheiten in Abhängigkeit vom Lastzustand im Schienenfahrzeug gesteuert oder geregelt wird. Dies kann beispielsweise im Teillastbetrieb dadurch geschehen, dass eine oder mehrere dezentrale Energieversorgungseinheiten abgeschaltet werden. Dadurch entstehen weniger Verluste, als wenn alle dezentralen Energieversorgungseinheiten im Teillastbetrieb arbeiten und dabei vergleichsweise hohe Verluste erzeugen.

Im Folgenden wird die Erfindung anhand der in den Figuren dargestellten Ausführungsbeispiele näher beschrieben und erläutert. Es zeigen:
- FIG 1 und FIG 2: Ausführungsbeispiele eines Energieversorgungssystems eines Schienenfahrzeugs und
- FIG 3: ein Ausführungsbeispiel einer redundanten zentralen Energieversorgungseinheit.

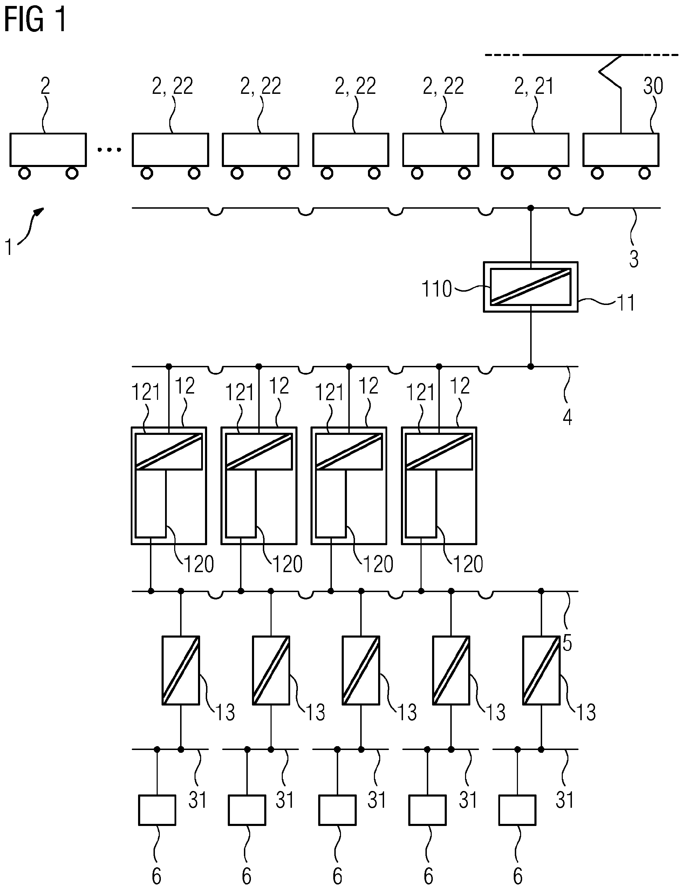

Die FIG 1 zeigt ein Ausführungsbeispiel eines Energieversorgungssystems in einem Schienenfahrzeug 1. Das Schienenfahrzeug 1 weist neben einer Lokomotive 30 Reisezugwagen 2 auf.

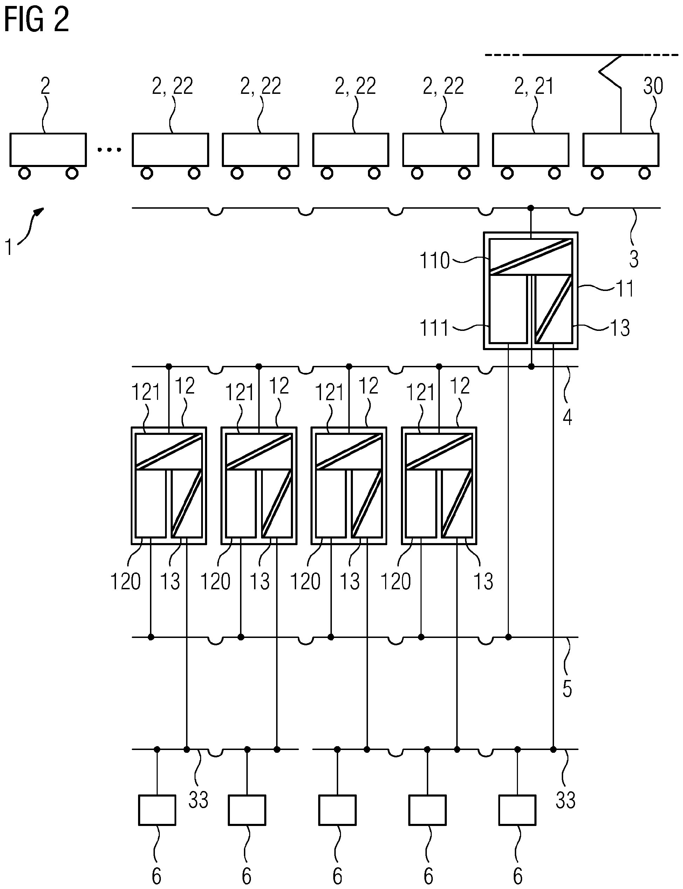

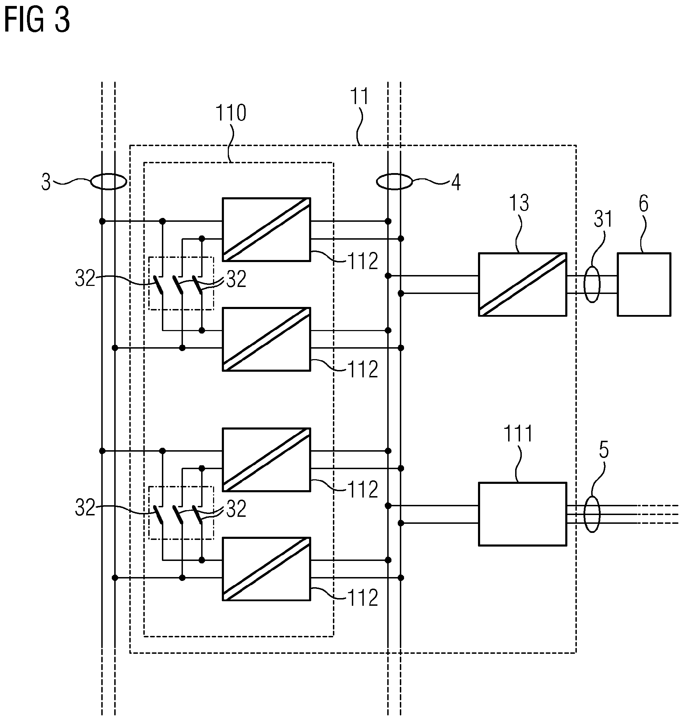

Das Schienenfahrzeug 1 weist zur Verteilung von elektrischer Energie eine Zugsammelschiene 3 auf, die sich über alle Reisezugwagen 2 des Schienenfahrzeugs erstreckt. Daneben existieren eine DC-Versorgungssammelschiene 4 und eine 3AC-Sammelschiene die sich über mindestens zwei der Reisezugwagen 2 erstreckt. Diese werden auch als erste Reisezugwagen 21 und zweite Reisezugwagen 22 der mindestens zwei Reisezugwagen 2 bezeichnet. Die DC-Versorgungssammelschiene 4 wird über die zentrale Energieversorgungseinheit 11 aus der Zugsammelschiene 3 mit elektrischer Energie versorgt. Dazu weist die zentrale Energieversorgungseinheit 11 einen Eingangssteller 110 auf. Dieser kann sowohl eine Eingangsspannung nach UIC550, UIC626 oder auch 3kV AC in eine Gleichspannung, insbesondere von 670V, der DC-Versorgungssammelschiene 4 umwandeln. Dabei hat es sich als vorteilhaft erwiesen, eine Potenzialtrennung in die zentrale Energieversorgungseinheit 11, insbesondere in den dortigen Eingangssteller 110, zu integrieren, da sich damit ein Erdschluss im Energieversorgungssystem einfach erfassen lässt und auch einen vorübergehenden Betrieb beim Vorliegen eines Erdschlusses ermöglicht. Durch die Potenzialtrennung des Eingangsstellers 110 sind alle Komponenten die direkt oder indirekt mit dem Ausgang der zentralen Energieversorgungseinheit 11 verbunden sind, von dem Bereich hoher Spannungen (>1000V) sicher getrennt. Diese Komponenten, insbesondere dezentrale Energieversorgungseinheiten 12, DC-Versorgungssammelschiene 4, 3AC-Sammelschiene 5, sowie Batterieladegeräte 13, Batterie 6 und Batterienetz 31, sind somit sicher von hohen Spannungen isoliert, so dass diese nur für Niederspannung (<1000V) ausgelegt sein müssen. Die zentrale Energieversorgungseinheit ist dabei im ersten Reisezugwagen 21 der mindestens zwei Reisezugwagen 21, 22 angeordnet, über die sich die DC-Versorgungssammelschiene 4 und 3AC-Sammelschiene 5 erstrecken. Einen möglichen Aufbau der zentralen Energieversorgungseinheit wird anhand FIG 3 erläutert. Ein Pulswechselrichter 111 kann in der zentralen Energieversorgungseinheit 11 angeordnet werden, um auch durch die zentrale Energieversorgungseinheit 11 die 3AC-Sammelschiene mit Energie versorgen zu können. Näheres hierzu wird in FIG 2 beschrieben.

Die 3AC-Sammelschiene 5 wird über die dezentralen Energieversorgungseinheiten 12 aus der DC-Versorgungssammelschiene 4 mit elektrischer Energie versorgt. Dazu ist mindestens eine dezentrale Energieversorgungseinheit 12 notwendig, die in einem zweiten Reisezugwagen 22 angeordnet ist. Dabei hat es sich als vorteilhaft erwiesen, in dieser dezentralen Energieversorgungseinheit 12 eine Potenzialtrennung vorzusehen, um die einzelnen dezentralen Energieversorgungseinheiten 12 auf einfache Weise parallel anordnen zu können. Eine Synchronisierung der Schaltvorgänge in den dezentralen Energieversorgungseinheiten 12 ist dann wegen der Potenzialtrennung nicht erforderlich. Eine Potenzialtrennung lässt sich dabei in einfacher Weise in einem Gleichspannungssteller 121 realisieren, der Teil der dezentralen Energieversorgungseinheit 12 ist. Zudem ermöglicht der Gleichspannungssteller 121 eine Anpassung der DC Spannung, so dass zur nachfolgenden Umwandlung in eine Wechselspannung durch einen weiteren Pulswechselrichter 120 Standardmodule verwendet werden können. Aufgabe des weiteren Pulswechselrichters 120 ist es, eine dreiphasige Wechselspannung zu erzeugen, mit der die 3AC-Sammelschiene gespeist werden kann. Aus dieser 3AC-Sammelschiene können, ebenso wie auch aus der DC-Versorgungssammelschiene, elektrische Verbraucher des Reisezugwagens 2, 21, 22 gespeist werden. Zum Schutz vor einem Spannungsausfall weist jeder Reisezugwagen noch eine Batterie 6 auf, die an einem Batterienetz 31 angeschlossen ist. Das Batterienetz 31 ist ein wageninternes Netz, welches sich nicht über mehrere Reisezugwagen 2 erstreckt. Über ein Batterieladegerät 13 wird Energie zwischen 3AC-Sammelschiene 5 und Batterie ausgetauscht, beispielsweise zum Laden der Batterie oder zur Versorgung von elektrischen Verbrauchern bei Ausfall von Teilen des Energieversorgungssystems. Das Batterieladegerät 13 weist dabei eine Potenzialtrennung zwischen Eingangs- und Ausgangsseite auf, so dass die 3AC-Sammelschiene und die Spannung des Batterienetzes ein unabhängiges elektrisches Potenzial voneinander haben. Dabei kann das Batterieladegerät 13 außerhalb der dezentralen Energieversorgungseinheit 12 sein, wie in FIG 1 dargestellt, oder Teil der dezentralen Energieversorgungseinheit 12 sein, wie in FIG 2 dargestellt.

FIG 2 zeigt eine Alternative eines Energieversorgungssystems eines Schienenfahrzeugs 1. Zur Vermeidung von Wiederholungen wird auf die Beschreibung zu FIG 1 und die dort eingeführten Bezugszeichen verwiesen. Neben den in FIG 1 und FIG 2 dargestellten Energieversorgungsystemen können auch weitere Energieversorgungsysteme aus einer Kombination der in FIG 1 und FIG 2 dargestellten Systeme zum Einsatz kommen.

Das Schienenfahrzeug 1 der FIG 2 kann auch noch weitere hier nicht dargestellte Reisezugwagen 2 umfassen, über die sich die DC-Versorgungssammelschiene oder die 3AC-Sammelschiene nicht erstreckt. Im Gegensatz zur FIG 1 weist die zentrale Energieversorgungseinheit 11 einen Pulswechselrichter 111 auf. Dabei arbeiten Eingangssteller 110 und Pulswechselrichter 111 zweistufig. Der Eingangssteller 110 erzeugt in einer ersten Stufe aus der Sammelschiene, je nach Fahrdrahtspannung des Schienenfahrzeugs 1 aus einer Gleich- oder Wechselspannung, eine Gleichspannung, mit der die DC-Versorgungssammelschiene 4 gespeist wird. In einer zweiten Stufe wird aus dieser zuvor erzeugten und von der Zugsammelschiene 3 galvanisch getrennten Gleichspannung noch mittels des Pulswechselrichters 111 eine Wechselspannung, insbesondere eine dreiphasige Wechselspannung, zur Speisung der 3AC-Sammelschiene 5. Gerade wenn sich die DC-Versorgungssammelschiene 4 und die 3AC-Sammelschiene 5 nur über wenige Reisezugwagen erstreckt, kann dadurch eine hohe Versorgungssicherheit durch Redundanz sichergestellt werden. Auch ein Batterieladegerät 13 kann in der zentralen Energieversorgungseinheit 11 integriert werden. Dabei hat es sich als besonders vorteilhaft erwiesen, wenn Pulswechselrichter 111 der zentralen Energieversorgungseinheit 11 und weitere Pulswechselrichter 120 der dezentralen Energieversorgungseinheit 12 baugleich ausgeführt sind.

Darüber hinaus kann, allerdings nicht notwendigerweise, das Batterieladegerät 13 in den zweiten Reisezugwagen in der dezentralen Energieversorgungseinheit 12 angeordnet werden.

Alternativ zu FIG 1 sind in diesem Ausführungsbeispiel zwei oder mehr Batterienetze der Reisezugwagen miteinander über die Wagenübergänge zu einer Batteriesammelschiene 33 miteinander verbinden. Dabei kann sich die Batteriesammelschiene 33 über die gleichen Reisezugwagen 2, 21, 22 wie auch die DC-Versorgungsspannungsschiene oder die 3AC-Sammelschiene oder über andere. In diesem Ausführungsbeispiel erstreckt sich die Batteriesammelschiene 33 über weniger Reisezugwagen als die DC-Versorgungsspannungsschiene bzw. die 3AC-Sammelschiene. Ebenso ist es möglich, dass sich die Batteriesammelschiene 33 über mehr Reisezugwagen 2 erstreckt als die DC-Versorgungsspannungsschiene bzw. die 3AC-Sammelschiene. Es ist auch möglich dass sich die Batteriesammelschiene 33 über alle Reisezugwagen 2 des Schienenfahrzeugs erstreckt. Alternativ zu der in FIG 2 dargestellten Ausführung kann auch bei diesem Ausführungsbeispiel die Anbindung der Batterien 6 wie in FIG 1 erfolgen.

Insbesondere ist die Anordnung über eine Batteriesammelschiene 33 dann vorteilhaft, wenn die Batterien 6 über ein integriertes Lademanagement verfügen. Die Batterien 6 sind dann mit einer Batteriesammelschiene verbunden, die sich aus dem Zusammenschalten der einzelnen Batterienetze 31 ergibt. Dabei entscheidet nicht die Spannungshöhe der Batteriesammelschiene, ob eine Batterie geladen oder entladen wird, sondern dies wird über ein integriertes Lademanagement gesteuert oder geregelt. Dabei umfasst das Lademanagement noch ein Stellglied, in einem einfachen Fall beispielsweise einen Schalter, insbesondere einen Halbleiterschalter, mit dem die Ladung der jeweiligen Batterie 6 gesteuert werden kann. Die Steuerung der Batterien 6 kann dabei unabhängig voneinander erfolgen.

FIG 3 zeigt ein Ausführungsbeispiel einer redundanten, zentralen Energieversorgungseinheit 11. Mit Hilfe von Mittelfrequenzumrichtern 112 kann eine sowohl redundante als auch Potenzialgetrennte Energieübertragung zwischen Zugsammelschiene 3 und DC-Versorgungssammelschiene 4 realisiert werden. Mit Hilfe von Schaltern 32 können zwei oder mehr der Mittelfrequenzumrichter 112 eingangsspannungsseitig, d.h. auf Seite der Zugsammelschiene 3, entweder elektrisch parallel oder elektrisch in Reihe angeordnet werden. Die Schalter 32 sind dabei meist zu einer Umschalteinrichtung zusammengefasst, die dann spannungs- und leistungsfrei verfahren, d.h. geschaltet werden. Die Schalter 32 sind symbolisch für die Art der Umgruppierung angegeben.

In diesem Ausführungsbeispiels sind zwei Mittelfrequenzumrichter 112 mittels der Schalter 32 in Reihe oder parallel anordenbar. Diese Anzahl kann weiter erhöht werden. Damit kann auch bei unterschiedlicher Höhe der Eingangsspannung eine hohe elektrische Leistung übertragen werden. So können beispielsweise bei einer Gleichspannung von 3kV an der Zugsammelschiene 3 die Schalter 32 derart geschaltet werden, dass die beiden Mittelfrequenzumrichter 112 in einer Reihenschaltung angeordnet sind, um eine entsprechende Spannungsfestigkeit zu erreichen und bei einer Spannung von 1,5kV in einer Parallelschaltung angeordnet sind, um damit eine hohe Stromtragfähigkeit zu erreichen. Somit ist in beiden Fällen eine benötigte Leistung ohne Überdimensionierung in beiden Betriebsfällen (unterschiedliche Betriebsspannung der Zugsammelschiene 3) realisierbar.

Dabei können die Mittelfrequenzumrichter 112 sowohl aus einer Gleichspannung als auch aus einer Wechselspannung eine benötigte Gleichspannung für die DC-Versorgungssammelschiene 4 erzeugen. Den Namen Mittelfrequenzumrichter 112 bekommt die Vorrichtung in dieser Anordnung daher, da es sich als vorteilhaft erwiesen hat, innerhalb des Mittelfrequenzumrichters eine Spannung mit einer Frequenz im Bereich von 10kHz bis 30kHz zu erzeugen und diese über einen im Mittelfrequenzumrichter 112 vorhandenen Mittelfrequenztransformators zu übertragen. Mit Hilfe dieses Mittelfrequenztransformators ist eine Potenzialtrennung zwischen Eingang und Ausgang, d.h. zwischen Sammelschiene 3 und DC-Versorgungssammelschiene 4, des Eingangsstellers 110 realisierbar. Vorteil der Mittelfrequenz ist der besonders kleine und leichte sowie verlustarme Transformator.

Um auch bei Ausfall eines Mittelfrequenzumrichters 112 noch den Betrieb aufrecht erhalten zu können, werden anstelle von zwei Mittelfrequenzumrichtern 112 vier Mittelfrequenzumrichter 112 im Eingangssteller 110 angeordnet. Mit Hilfe von hier nicht dargestellten weiteren Schaltern kann bei Defekt eines Mittelfrequenzumrichters 112 dieser aus der Übertragungskette herausgenommen werden. Dann kann die zentrale Energieversorgungseinheit, gegebenenfalls bei reduzierter Leistung, weiter Energie übertragen.

Des Weiteren weist die zentrale Energieversorgungseinheit 11 optional ein Batterieladegerät 13 zur Anbindung einer Batterie 6 über ein Batterienetz 31 auf. Ebenso optional kann die zentrale Energieversorgungseinheit 11 einen Pulswechselrichter 111 zur Speisung der 3AC-Sammelschiene 5 aus der DC-Versorgungssammelschiene 4 aufweisen.

Zusammenfassend betrifft die Erfindung ein Schienenfahrzeug mit einem Energieversorgungssystem zur Speisung von elektrischen Verbrauchern, wobei das Schienenfahrzeug Reisezugwagen aufweist, wobei das Schienenfahrzeug eine Zugsammelschiene aufweist. Zur Verbesserung des Energieversorgungssystems des Schienenfahrzeugs wird vorgeschlagen, dass das Schienenfahrzeug eine DC-Versorgungssammelschiene und eine 3AC-Sammelschiene aufweist, wobei die DC-Versorgungssammelschiene und die 3AC-Sammelschiene sich über mindestens zwei der Reisezugwagen erstrecken, wobei die DC-Versorgungssammelschiene über eine zentrale Energieversorgungseinheit mit der Zugsammelschiene verbunden ist, wobei die zentrale Energieversorgungseinheit in einem ersten Reisezugwagen der mindestens zwei Reisezugwagen, über die sich die DC-Versorgungssammelschiene und die 3AC-Sammelschiene erstrecken, angeordnet ist, wobei in mindestens einem zweiten Reisezugwagen der mindestens zwei Reisezugwagen jeweils eine dezentraler Energieversorgungseinheit angeordnet ist, wobei die dezentrale Energieversorgungseinheit mit der DC-Versorgungssammelschiene und der 3AC-Sammelschiene verbunden ist. Die Erfindung betrifft weiter ein Verfahren zum Betreiben des Energieversorgungssystems eines solchen Schienenfahrzeugs.

## Patentansprüche

1. Schienenfahrzeug (1) mit einem Energieversorgungssystem zur Speisung von elektrischen Verbrauchern, wobei das Schienenfahrzeug (1) Reisezugwagen (2) aufweist, wobei das Schienenfahrzeug (1) eine Zugsammelschiene (3) aufweist,
**dadurch gekennzeichnet, dass**
das Schienenfahrzeug (1) eine DC-Versorgungssammelschiene (4) und eine 3AC-Sammelschiene (5) aufweist, wobei die DC-Versorgungssammelschiene (4) und die 3AC-Sammelschiene (5) sich über mindestens zwei der Reisezugwagen (2) erstrecken, wobei die DC-Versorgungssammelschiene (4) über eine zentrale Energieversorgungseinheit (11) mit der Zugsammelschiene (3) verbunden ist, wobei die zentrale Energieversorgungseinheit (11) in einem ersten Reisezugwagen (21) der mindestens zwei Reisezugwagen (2), über die sich die DC-Versorgungssammelschiene (4) und die 3AC-Sammelschiene (5) erstrecken, angeordnet ist, wobei in mindestens einem zweiten Reisezugwagen (22) der mindestens zwei Reisezugwagen (2) jeweils eine dezentraler Energieversorgungseinheit (12) angeordnet ist, wobei die dezentrale Energieversorgungseinheit (12) mit der DC-Versorgungssammelschiene (4) und der 3AC-Sammelschiene (5) verbunden ist.

2. Schienenfahrzeug (1) nach Anspruch 1,
wobei die DC-Versorgungssammelschiene (4) für einen Betrieb mit einer Gleichspannung im Bereich von 600V bis 800V ausgelegt ist.

3. Schienenfahrzeug (1) nach einem der Ansprüche 1 oder 2, wobei die zentrale Energieversorgungeinheit (11) redundant ausgelegt ist.

4. Schienenfahrzeug (1) nach einem der Ansprüche 1 bis 3, wobei die zentrale Energieversorgungseinheit (11) eine Potenzialtrennung zwischen Zugsammelschiene (3) und DC-Versorgungssammelschiene (4) aufweist.

5. Schienenfahrzeug (1) nach einem der Ansprüche 1 bis 4, wobei die dezentrale Energieversorgungseinheit (12) eine Potenzialtrennung zwischen DC-Versorgungssammelschiene (4) und 3AC-Sammelschiene (5) aufweist.

6. Schienenfahrzeug (1) nach einem der Ansprüche 1 bis 5, wobei das Schienenfahrzeug (1) eine Batterie (6) und ein Batterieladegerät (13) aufweist, wobei mittels des Batterieladegerätes (13) elektrische Energie in beiden Energieflussrichtungen gesteuert oder geregelt zwischen der Batterie (6) und der DC-Versorgungssammelschiene (4) und/oder der 3AC-Sammelschiene (5) austauschbar ist.

7. Schienenfahrzeug (1) nach Anspruch 6,
wobei die Batterie (6) und das Batterieladegerät (13) über eine Batteriesammelschiene (33) miteinander verbunden sind, wobei die Batteriesammelschiene (33) sich über mindestens zwei der Reisezugwagen (2) erstreckt.

8. Schienenfahrzeug (1) nach einem der Ansprüche 6 oder 7, wobei das Batterieladegerät in der dezentralen Energieversorgungseinheit angeordnet ist, wobei die Batterie (6) im gleichen Reisezugwagen (2,22) angeordnet ist wie die jeweilige dezentrale Energieversorgungseinheit (12).

9. Schienenfahrzeug (1) nach einem der Ansprüche 1 bis 8, wobei im Falle von mehreren dezentralen Energieversorgungseinheiten (12) die dezentralen Energieversorgungseinheiten (12) baugleich ausgeführt sind.

10. Schienenfahrzeug (1) nach einem der Ansprüche 1 bis 9, wobei die zentrale Energieversorgungseinheit (11) mit der 3AC-Sammelschiene (5) verbunden ist.

11. Schienenfahrzeug (1) nach Anspruch 10,
wobei die zentrale Energieversorgungseinheit (11) zweistufig ausgeführt ist, wobei ein erste Stufe zwischen der Zugsammelschiene (3) und der DC-Versorgungssammelschiene (4) durch einen Eingangssteller (110) mit einer ersten Nennleistung (P_{nenn,1}) gebildet wird, wobei eine zweite Stufe zwischen DC-Versorgungssammelschiene (4) und 3AC-Sammelschiene (5) durch einen Pulswechselrichter (111) mit einer zweiten Nennleistung (P_{nenn,2}) gebildet wird, wobei die erste Nennleistung (P_{nenn,1}) größer ist als die zweite Nennleistung (P_{nenn,2}), wobei die dezentrale Energieversorgungseinheit (12) einen weiteren Pulswechselrichter (120) mit der zweiten Nennleistung (P_{nenn,2}) aufweist.

12. Schienenfahrzeug (1) nach einem der Ansprüche 1 bis 11, wobei das Schienenfahrzeug (1) fünf Reisezugwagen (2) aufweist, über die sich die DC-Versorgungssammelschiene (4) und die 3AC-Sammelschiene (5) erstrecken, wobei das Schienenfahrzeug (1) einen ersten Reisezugwagen (21) und vier zweite Reisezugwagen (22) umfasst.

13. Verfahren zum Betreiben des Energieversorgungssystems eines Schienenfahrzeugs (1) nach einem der Ansprüche 1 bis 12, wobei mittels der zentralen Energieversorgungseinheit (11) die DC-Versorgungssammelschiene (4) und/oder die 3AC-Sammelschiene (5) mit elektrischer Energie aus der Zugsammelschiene (3) versorgt werden, wobei mittels der dezentralen Energieversorgungseinheit (12) elektrische Energie zwischen der DC-Versorgungssammelschiene (4) und der 3AC-Sammelschiene (5) ausgetauscht wird.

14. Verfahren zum Betreiben des Energieversorgungssystems nach Anspruch 13,
wobei die dezentrale Energieversorgungseinheit (12) in Abhängigkeit des Leistungsbedarfs der an die 3AC-Sammelschiene angeschlossenen elektrischen Verbraucher gesteuert, insbesondere zu- oder abgeschaltet, wird.

15. Verfahren zum Betreiben des Energieversorgungssystems nach einem der Ansprüche 11 oder 12
mit einer Batterie (6) und einem Batterieladegerät (13) zumindest gemäß Anspruch 6, wobei zumindest zeitweise die 3AC-Sammelschiene (5) und/oder die DC-Versorgungssammelschiene (4) über das Batterieladegerät (13) mit elektrischer Energie aus der Batterie (6) versorgt werden.

## Claims

1. Rail vehicle (1) having an energy supply system for supplying electrical consumers, wherein the rail vehicle (1) has passenger coaches (2), wherein the rail vehicle (1) has a train busbar (3),
**characterised in that**
the rail vehicle (1) has a DC supply busbar (4) and a 3AC busbar (5), wherein the DC supply busbar (4) and the 3AC busbar (5) extend over at least two of the passenger coaches (2), wherein the DC supply busbar (4) is connected to the train busbar (3) via a central energy supply unit (11), wherein the central energy supply unit (11) is arranged in a first passenger coach (21) of the at least two passenger coaches (2), over which the DC supply busbar (4) and the 3AC busbar (5) extend, wherein in at least one second passenger coach (22) of the at least two passenger coaches (2) a decentralised energy supply unit (12) is arranged in each case, wherein the decentralised energy supply unit (12) is connected to the DC supply busbar (4) and the 3AC busbar (5).

2. Rail vehicle (1) according to claim 1,
wherein the DC supply busbar (4) is designed for operation with a DC voltage in the range between 600V and 800V.

3. Rail vehicle (1) according to one of claims 1 or 2, wherein the central energy supply unit (11) is designed redundantly.

4. Rail vehicle (1) according to one of claims 1 to 3, wherein the central energy supply unit (11) has an isolating component between the train busbar (3) and the DC supply busbar (4).

5. Rail vehicle (1) according to one of claims 1 to 4, wherein the decentralised energy supply unit (12) has an isolating component between the DC supply busbar (4) and the 3AC busbar (5).

6. Rail vehicle (1) according to one of claims 1 to 5, wherein the rail vehicle (1) has a battery (6) and a battery charger (13), wherein by means of the battery charger (13) electrical energy can be exchanged in a controlled or regulated manner in both energy flow directions between the battery (6) and the DC supply busbar (4) and/or the 3AC busbar (5) .

7. Rail vehicle (1) according to claim 6,
wherein the battery (6) and the battery charger (13) are connected to one another via a battery busbar (33), wherein the battery busbar (33) extends over at least two of the passenger coaches (2).

8. Rail vehicle (1) according to one of claims 6 or 7,
wherein the battery charger is arranged in the decentralised energy supply unit, wherein the battery (6) is arranged in the same passenger coach (2, 22) as the respective decentralised energy supply unit (12).

9. Rail vehicle (1) according to one of claims 1 to 8, wherein in the case of a plurality of decentralised energy supply units (12) the decentralised energy supply units (12) are of identical construction.

10. Rail vehicle (1) according to one of claims 1 to 9, wherein the central energy supply unit (11) is connected to the 3AC busbar (5).

11. Rail vehicle (1) according to claim 10,
wherein the central energy supply unit (11) is designed in two stages, wherein a first stage between the train busbar (3) and the DC supply busbar (4) is formed by an input divider (110) with a first rated power (P_{nenn,1}), wherein a second stage between the DC supply busbar (4) and the 3AC busbar (5) is formed by a pulse inverter (111) with a second rated power (P_{nenn,2}), wherein the first rated power (P_{nenn,1}) is greater than the second rated power (P_{nenn,2}), wherein the decentralised energy supply unit (12) has a further pulse inverter (120) with the second rated power (P_{nenn,2}).

12. Rail vehicle (1) according to one of claims 1 to 11, wherein the rail vehicle (1) has five passenger coaches (2) over which the DC supply busbar (4) and the 3AC busbar (5) extend, wherein the rail vehicle (1) comprises a first passenger coach (21) and four second passenger coaches (22).

13. Method for operating the energy supply system of a rail vehicle (1) according to one of claims 1 to 12,
wherein by means of the central energy supply unit (11) the DC supply busbar (4) and/or the 3AC busbar (5) are supplied with electrical energy from the train busbar (3), wherein electrical energy is exchanged between the DC supply busbar (4) and the 3AC busbar (5) by means of the decentralised energy supply unit (12).

14. Method for operating the energy supply system according to claim 13,
wherein the decentralised energy supply unit (12) is controlled, in particular switched on or off, as a function of the power requirement of the electrical consumers connected to the 3AC busbar.

15. Method for operating the energy supply system according to one of claims 11 or 12,
having a battery (6) and a battery charger (13) at least according to claim 6, wherein at least temporarily the 3AC busbar (5) and/or the DC supply busbar (4) can be supplied with electrical energy from the battery (6) via the battery charger (13).

## Revendications

1. Véhicule (1) ferroviaire ayant un système d'alimentation en énergie pour l'alimentation de consommateurs électriques, le véhicule (1) ferroviaire ayant une voiture (2) à voyageurs, le véhicule (1) ferroviaire ayant une barre (3) collectrice de train,
**caractérisé en ce que**
le véhicule (1) ferroviaire a une barre (4) collectrice d'alimentation DC et une barre (5) collectrice 3AC, la barre (4) collectrice d'alimentation DC et la barre (5) collectrice 3AC s'étendant sur au moins deux des voitures (2) à voyageurs, la barre (4) collectrice d'alimentation DC étant reliée à la barre (3) collectrice de train par une unité (11) centrale d'alimentation en énergie, l'unité (11) centrale d'alimentation en énergie étant disposée dans une première voiture (21) à voyageurs des au moins deux voitures (2) à voyageurs, sur laquelle s'étendent la barre (4) collectrice d'alimentation DC et la barre (5) collectrice 3AC, dans lequel, dans au moins une deuxième voiture (22) à voyageurs des au moins deux voitures (2) à voyageurs est disposée, respectivement, une unité (12) décentralisée d'alimentation en énergie, l'unité (12) décentralisée d'alimentation en énergie étant reliée à la barre (4) collectrice d'alimentation DC et à la barre (5) collectrice 3AC.

2. Véhicule (1) ferroviaire suivant la revendication 1,
dans lequel la barre (4) collectrice d'alimentation DC est conçue pour un fonctionnement avec une tension continue dans la plage de 600V à 800V.

3. Véhicule (1) ferroviaire suivant l'une des revendications 1 ou 2,
dans lequel l'unité (11) centrale d'alimentation en énergie est conçue de manière redondante.

4. Véhicule (1) ferroviaire suivant l'une des revendications 1 à 3,
dans lequel l'unité (3) centrale d'alimentation en énergie a une séparation de potentiel entre la barre (3) collectrice de train et la barre (4) collectrice d'alimentation DC.

5. Véhicule (1) ferroviaire suivant l'une des revendications 1 à 4,
dans lequel l'unité (12) décentralisée d'alimentation en énergie a une séparation de potentiel entre la barre (4) collectrice d'alimentation DC et la barre (5) collectrice 3AC.

6. Véhicule (1) ferroviaire suivant l'une des revendications 1 à 5,
dans lequel le véhicule (1) ferroviaire a une batterie (6) et un appareil (13) de charge de batterie, dans lequel, au moyen de l'appareil (13) de charge de batterie, de l'énergie électrique peut être échangée dans les deux sens de flux d'énergie, de manière commandée ou régulée, entre la batterie (6) et la barre (4) collectrice d'alimentation DC et/ou la barre (5) collectrice 3AC.

7. Véhicule (1) ferroviaire suivant la revendication 6,
dans lequel la batterie (6) et l'appareil (13) de charge de batterie sont reliés entre eux par une barre (13) collectrice de batterie, la barre (13) collectrice de batterie s'étendant sur au moins deux des voitures (2) à voyageurs.

8. Véhicule (1) ferroviaire suivant l'une des revendications 6 ou 7,
dans lequel l'appareil de charge de batterie est disposé dans l'unité décentralisée d'alimentation en énergie, la batterie (6) étant disposée dans la même voiture (2, 22) à voyageurs que l'unité (12) respective décentralisée d'alimentation en énergie.

9. Véhicule (1) ferroviaire suivant l'une des revendications 1 à 8,
dans lequel, dans le cas de plusieurs unités (12) décentralisées d'alimentation en énergie, les unités (12) décentralisées d'alimentation en énergie sont réalisées en étant construites pareillement.

10. Véhicule (1) ferroviaire suivant l'une des revendications 1 à 9,
dans lequel l'unité (11) centrale d'alimentation en énergie est reliée à la barre (5) collectrice 3AC.

11. Véhicule (1) ferroviaire suivant la revendication 10, dans lequel l'unité (11) centrale d'alimentation en énergie est réalisée en deux étages, un premier étage étant formé entre la barre (3) collectrice de train et la barre (4) collectrice d'alimentation DC par un régleur (110) d'entrée ayant une première puissance (P_{nenn,1}) nominale, un deuxième étage étant formé entre la barre (4) collectrice d'alimentation DC et la barre (5) collectrice 3AC par un onduleur (111) à impulsions ayant une deuxième puissance (P_{nenn,2}) nominale, la première puissance (P_{nenn,1}) nominale étant plus grande que la deuxième puissance (P_{nenn,2}) nominale, l'unité (12) décentralisée d'alimentation en énergie ayant un autre onduleur (120) à impulsions ayant la deuxième puissance (P_{nenn,2}) nominale.

12. Véhicule (1) ferroviaire suivant l'une des revendications 1 à 11,
dans lequel le véhicule (1) ferroviaire a cinq voitures (2) à voyageurs, sur lesquelles s'étendent la barre (4) collectrice d'alimentation DC et la barre (5) collectrice 3AC, le véhicule (1) ferroviaire comprenant une première voiture (21) à voyageurs et quatre deuxièmes voitures (22) à voyageurs.

13. Procédé pour faire fonctionner le système d'alimentation en énergie d'un véhicule (1) ferroviaire suivant l'une des revendication 1 à 12,
dans lequel, au moyen de l'unité (11) centrale d'alimentation en énergie, on alimente la barre (4) collectrice d'alimentation DC et/ou la barre (5) collectrice 3AC en énergie électrique à partir de la barre (3) collectrice de train, dans lequel, au moyen de l'unité (12) décentralisée d'alimentation en énergie, on échange de l'énergie électrique entre la barre (4) collectrice d'alimentation DC et la barre (5) collectrice 3AC.

14. Procédé pour faire fonctionner le système d'alimentation en énergie suivant la revendication 13,
dans lequel on commande, notamment on branche ou on débranche, l'unité (12) décentralisée d'alimentation en énergie en fonction du besoin de puissance des consommateurs électriques raccordés à la barre collectrice 3AC.

15. Procédé pour faire fonctionner le système d'alimentation en énergie suivant l'une des revendications 11 ou 12,
comprenant une batterie (6) et un appareil (13) de batterie au moins suivant la revendication 6,
dans lequel, au moins de temps en temps, on alimente la barre (5) collectrice 3AC et/ou la barre (4) collectrice d'alimentation DC, en énergie électrique de la batterie (6) par l'appareil (13) de charge de batterie.
